# EUROPEAN PATENT APPLICATION

(11) **EP 4 592 469 A1**
(43) Date of publication of application: **30.07.2025**
(21) Application number: 25154130.6
(22) Date of filing: 27.01.2025
(51) Int. Cl.: E04D 13/14, F24S 25/61

(54) **MOUNTING DEVICE**

(30) Priority: 29.01.2024 NL 2036917
(71) Applicant: Eyecatcher Solar Support B.V., 2421 NN Nieuwkoop (NL)
(72) Inventor: SCHUURMAN, Adrianus Franciscus Gerardus, 2421 NN Nieuwkoop (NL); SCHUURMAN, Jacobus Jan, 2421 NN Nieuwkoop (NL)
(74) Representative: Jilderda, Anne Ayolt

(57) **Abstract**

A mounting device for an upstand on a roof surface (5), which roof surface (5) is supported by a beam construction (50), comprises a mounting base (10, 15) to be fastened to the roof surface. The mounting base (10, 15) provides fastening means (20) for mounting of the upstand. The mounting device comprises an adapter device (30) which is intended and configured for a durable and firm connection to a beam (50) of the beam construction. To the side of the beam (50) a force transmission is provided between the adapter device (30) and the fastening means (20).

## Description

The present invention relates to a mounting device for an upstand on a roof surface, which roof surface is supported by a beam construction, comprising a mounting base to be fastened to the roof surface and providing fastening means for mounting of the upstand, comprising an adapter device which is intended and configured for a durable and firm connection to a beam of the beam construction.

Such a mounting device is particularly intended and configured to mount a photovoltaic conversion panel, also referred to as solar panel, on a flat or slightly pitched roof surface. Such a roof surface is usually covered with a watertight roof covering in the form of a water barrier membrane of a flexible roof covering material such as bitumen, a polymer such as polyvinyl chloride (PVC) or a synthetic rubber such as ethylene propylene diene monomer (EPDM). This roof covering material is usually placed in strips and glued or welded watertightly in order to thus provide a continuous water barrier.

A mounting device suitable therefor is for instance known from a previous Netherlands patent NL 2028738 of applicant. The mounting device described therein comprises a central dish-shaped body which is surrounded by a water barrier membrane with which the whole is adhered only superficially to an existing roof covering. The existing roof covering is left completely intact and, particularly, not pierced here, so that the watertightness thereof is not affected. The central body of steel or aluminium provides a mounting member such as for instance a threaded end or screw bolt on which the upstand can be mounted in reliable manner. This provides a particularly practical and reliable mounting system, which has therefore proven itself in practice on roof surfaces which also provide sufficient strength and grip per se.

Also known in practice however are roof surfaces wherein a relatively thick assembly of insulating material is present under the roof covering for the purpose of an optimal thermal insulation of the building lying thereunder, or wherein the roof covering has or provides no or insufficient adhesion. There is therefore a need for a mounting system which can also be of use in such cases.

The present invention has for its object, among others, to provide a mounting device for an upstand on a roof surface which is supported by a beam construction, which is applicable irrespective of a sturdiness and strength of the roof surface.

In order to achieve the stated object a mounting device of the type described in the preamble has the feature according to the invention that the adapter device comprises an anchoring and is intended and configured to engage therewith behind the beam on a side remote from the mounting base, and that the adapter device provides a force transmission to the fastening means.

The invention thus provides an adapter device which can be fastened from the inside to a beam of the beam construction, which is usually freely accessible from the inside. To the side of the beam in question the roof surface can then be pierced from the inside together with any roof assembly which may be situated thereunder in order to provide space for the force transmission. This position can be accurately determined from the inside, this in contrast to from the outside, so that the roof assembly will be pierced at a suitable location. The mounting base can then be arranged externally at the position of the now visible drilled hole. On a side remote therefrom the adapter device comprises an anchoring for hooking behind the beam and supporting on the beam therewith. This achieves a reliable force transmission which is not only pressure-resistant but particularly also tension-resistant.

The force transmission can per se be embodied in various ways and with various means. A particularly practical embodiment of the mounting device however has the feature according to the invention that the force transmission is formed by an elongate rigid body which mutually connects the adapter device and the mounting base, particularly a rigid rod body, more particularly a threaded end. Provided that it is made from a robust material, such as metal or fibre-reinforced plastic, and suitably dimensioned, a rigid body, such as particularly a rod body or threaded end, provides a particularly effective force transmission which is pressure-resistant and also tension-resistant. A preferred embodiment of the mounting device has the feature here according to the invention that the force transmission protrudes through the mounting base and also provides the fastening means.

Because the roof surface is interrupted at the position of the force transmission in order to provide passage, a water barrier must be provided therearound. With this in mind, a further particular embodiment of the mounting device has the feature according to the invention that the mounting base comprises a central dish-shaped body which is provided all around along a periphery thereof with a water-barrier membrane, particularly of a flexible roof covering material, and that the fastening means protrude externally from the dish-shaped body in watertight manner. The integrity of the roof is thus restored again after mounting of the mounting base.

The adapter device of the mounting device according to the invention can also be embodied in various ways. A particular embodiment of the mounting device is in that respect characterized according to the invention in that the adapter device comprises a bent body with a flank for a screw connection to the beam and with a wing which extends relative thereto and which is connectable to the mounting base by means of the force transmission to the side of the beam. The flank provides an adequate mounting surface here for a robust and reliable connection, particularly a screw connection, to the beam, while the wing to the side of the beam provides an engagement for the force transmission in line with the drilled hole to be arranged in the roof surface.

A further particular embodiment of the mounting device according to the invention has the feature here that the bent body comprises a strip-like metal body with a substantially L-shaped or Z-shaped body section. Z-shaped is not distinguished from S-shaped here, and use is in all cases made of roughly right angles between the flank and the two wings. This connects optimally to a beam which is rectangular in cross-section, as is commonly applied in practice. This embodiment is particularly suitable here for applications wherein the beam comprises a solid, form-closed beam body, particularly of wood or concrete.

An alternative embodiment of the mounting device according to the invention has the feature that the anchoring comprises at least one clamping member which is intended and configured to engage clampingly on a flange of the beam. This embodiment is particularly suitable for applications wherein the beam body comprises an H-beam, particularly a steel H-beam. The flange extending from such a beam body or other beam body with a more open design provides an adequate point of engagement behind which the anchoring can engage clampingly. This prevents the beam body from having to be drilled into, which saves not only time and effort but furthermore prevents the mechanical strength and integrity of the beam from being affected even slightly.

For an optimal tensile strength in the force transmission a side of the beam remote from the roof surface is preferably engaged rigidly on. For this purpose a further preferred embodiment of the mounting device has the feature that the anchoring comprises a support body which engages on the beam on a side remote from the roof surface and extends laterally outside the beam, wherein the force transmission to the fastening means extends from the support body.

For the purpose of a universal and practical connection of the upstand to the mounting base a further particular embodiment has the feature according to the invention that the fastening means comprise one or more fastening members from a group comprising screw bolts, threaded ends and nuts.

The invention will be further elucidated hereinbelow with reference to an exemplary embodiment and an accompanying drawing. In the drawing:
- Figure 1: is a top view of an exemplary embodiment of a mounting base as applied in the mounting device of figures 2-3;
- Figure 2: is a cross-section of the mounting base of figure 1;
- Figure 3: is a cross-section of a first exemplary embodiment of a mounting device according to the invention;
- Figure 4: is a cross-section of a second exemplary embodiment of a mounting device according to the invention; and
- Figure 5: is a cross-section of a third exemplary embodiment of a mounting device according to the invention.

It is otherwise noted here that the figures are purely schematic and not all drawn to (the same) scale. Some dimensions in particular may be exaggerated to greater or lesser extent for the sake of clarity. Corresponding parts are designated in the figures with the same reference numeral.

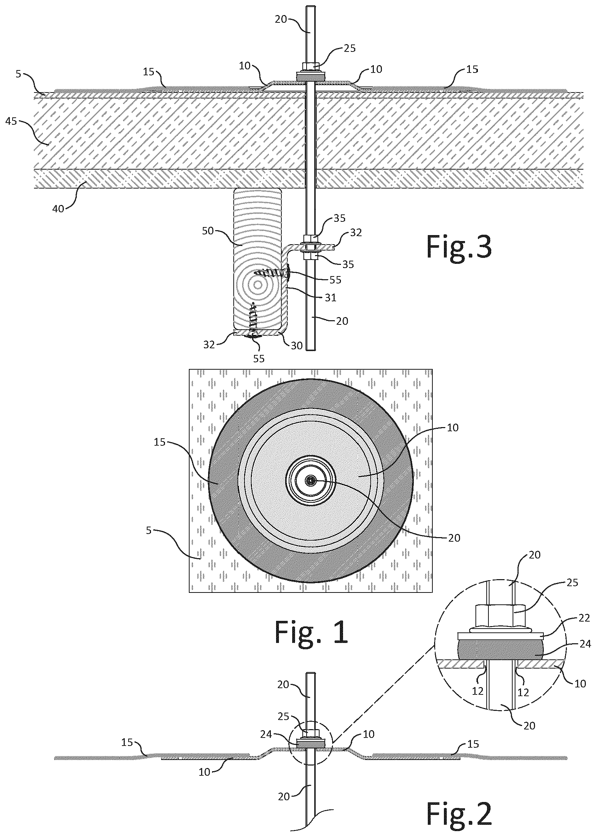

The mounting base shown in figures 1 and 2 comprises centrally a dish-shaped metal body 10 which is adhered watertightly to a surrounding rosette 15 of a suitable watertight membrane. Unless stated otherwise, all metal parts of the mounting device are embodied in this exemplary embodiment and those following below in stainless steel, although in some cases preserved, for instance galvanized or powder-coated standard steel and other metals can also be applied. In this example use is made for the membrane of a flexible roof covering material such as bitumen, a polymer such as polyvinyl chloride (PVC) or a synthetic rubber such as ethylene propylene diene monomer (EPDM). The material of rosette 15 is preferably adapted to the roof covering material which is found on or will be applied on roof surface 5. This ensures a watertight mutual adhesion all the more so, so that the rosette will provide for an adequate water barrier all around. Rosette 15 otherwise need not necessarily be round at its periphery, as it is here, but can also be given a different form, and the rosette can protrude outside the central body 10 to greater or lesser extent.

Situated centrally in the dish-shaped body 10 is an opening 12 through which a threaded end 20 protrudes. The threaded end 20 has an external metric thread M10, although use can in practice also be made of a different type of screw thread or a different size. The threaded end 20 is fastened firmly onto the dish 10 by means of a corresponding nut 25 with washer 22 with interposing of an optionally natural rubber ring 24 which provides for an adequate sealing of the opening 12.

In this example and the following examples the roof surface comprises a relatively thick assembly 45 of optionally natural insulating material, over which is arranged only a watertight membrane 5 of synthetic rubber, such as EPDM, or another roof covering material such as for instance bitumen or PVC. Standard roof boarding 40 is situated under the insulating assembly 45. The whole is supported by a beam construction, a beam 50 of which is shown in cross-section in figure 3.

A commonly used insulating material is for instance mineral wool or glass wool, which is formed into boards or sheets. Various foamed polymers, such as for instance polyurethane foam (PUR) or polyisocyanurate foam (PIR), are commonly applied for thermally insulating a building, this in addition to numerous ecological, natural insulating materials. What most insulating materials have in common is a relatively airy, open cell structure which provides little to no mechanical strength. As such, the roof assembly 40, 45 provides insufficient grip for fixing the central dish body 10 of the mounting base therein.

In order to nevertheless enable application of mounting base 10, 15 on roof surface 5, the invention provides an adapter device 30 whereby the dish body 10 can be anchored in force-transmitting manner to a beam 50 of the beam construction 50. In the example of figure 3 use is made of a wooden beam 50 and the adapter device 30 comprises a strip-like metal body with a substantially Z-shaped body section which was bent into this shape. The adapter body thus comprises a steep flank 31 and, at both outer end, a set of wings 32 extending in opposite directions. The flank 31 and lower wing 32 support against the beam 50 and are connected rigidly thereto by means of wood screws 55. The lower wing 32 thereby provides a particularly reliable anchoring on the underside of beam 50, which is particularly tension-resistant. The opposite wing 32 protrudes laterally outside the beam 50 for fastening of the threaded end 20 whereby the adapter device provides a force transmission to mounting base 10, 15.

For the purpose of the mutual connection between adapter device 30 and mounting base 10, 15 an opening is forced in roof assembly 40, 45 and roof surface 5 at the position of an opening provided in the wing 32 for threaded end 20. This can be done from the inside, in line with the opening in the distal wing. The threaded end 20 is then placed through the drilled hole and fastened in the distal wing 32 by means of a set of M10 flanged nuts 35. At the position of the threaded end 20 protruding from roof surface 5 the mounting base 10, 15 can now be arranged thereover and be finished watertightly in the above described manner. The threaded end 20 thus produces a force transmission to the adapter body 30, this in turn transferring any forces acting on mounting base 10, 15 to beam 50. The free outer end of threaded end 20 now provides a fastening means for a reliable mounting of an upstand on roof surface 5, such as for instance a photovoltaic device, also referred to as solar panel, a solar collector or an antenna device.

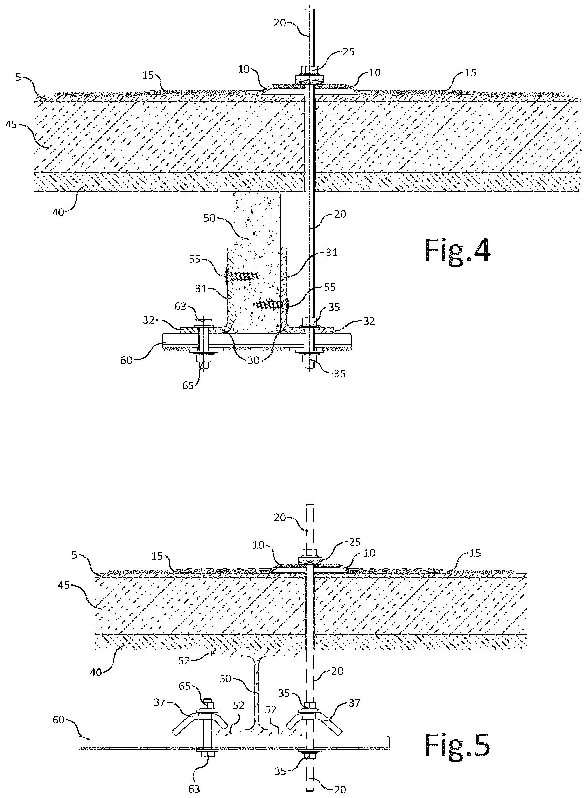

Figure 4 shows an alternative embodiment of a mounting device according to the invention. In this case use is made of a concrete girder 50 in the beam construction. The mounting device is largely identical to that of figure 3, although in this case the anchoring of the adapter device comprises two bent metal parts 30, each taking an L-shaped form. The upward-directed flank 31 of adapter body 30 is in this case also utilized for a reliable screw connection to beam 50, for which purpose 8x40 concrete screws 555 and plugs (not shown) are applied in this case. Both wings 32 of adapter device 30 projecting laterally from beam 50 comprise a central opening, this serving in one case to receive a short M10 screw bolt 63 and in the other case providing passage to the threaded end.

The anchoring of the adapter device further comprises a support body 60 which is slid over the screw bolts and is fastened firmly against the underside of beam 50 by means of M10 flanged nuts 35, 65. The threaded end 20 is fixed in the adapter device with a second M10 flanged nut 35. On the side of beam 50 remote from the roof surface the adapter device thus supports against the beam with support body 60 in order to thus transmit forces transmitted thereto by threaded end 20 to beam 50 in particularly effective manner.

A third exemplary embodiment of a mounting device according to the invention is shown in figure 5. The roof construction includes a steel H-beam 50 here. The H-beam thus comprises two flange parts 52, an upper of which lies against the roof assembly 40, 45 and a lower of which is freely accessible. In order to prevent steel beam 50 from having to be drilled into for fastening of an adapter device, use is in this example made of a clamping connection to the beam 50. For this purpose the adapter device also comprises a support body 60 in this case, this supporting against the H-beam on the underside and being clamped fixedly thereon by a clamping device in the form of a set of clamps 37. A first of the two clamps 37 is clamped round flange 52 by means of a relatively short M10 screw bolt 63 with flanged nut 65, while in the other clamp the threaded end 20 is utilized for this purpose. The threaded end 20 provides here by means of a set of flanged nuts 35 for both a rigid clamping around the flange end 52 and for its own fixation in the adapter device 60, 37. Any forces acting on an upstand on roof surface 5 anchored to mounting base 10, 15 can be transmitted to beam construction 50 by the rigid threaded end 20.

Although the invention has been further elucidated above with reference to only a single exemplary embodiment, it will be apparent that the invention is by no means limited thereto. On the contrary, many variations and embodiments are still possible within the scope of the invention for a person with ordinary skill in the art.

## Claims

1. Mounting device for an upstand on a roof surface, which roof surface is supported by a beam construction, comprising a mounting base to be fastened to the roof surface and providing fastening means for mounting of the upstand, comprising an adapter device which is intended and configured for a durable and firm connection to a beam of the beam construction, **characterized in that** the adapter device comprises an anchoring and is intended and configured to engage therewith behind the beam on a side remote from the mounting base, and that the adapter device provides a force transmission to the fastening means.

2. Mounting device according to claim 1, **characterized in that** the force transmission is formed by an elongate rigid body which mutually connects the adapter device and the mounting base, particularly a rigid rod body, more particularly a threaded end.

3. Mounting device according to claim 2, **characterized in that** the force transmission protrudes through the mounting base and also provides the fastening means.

4. Mounting device according to claim 1, 2 or 3, **characterized in that** the mounting base comprises a central dish-shaped body which is provided all around along a periphery thereof with a water-barrier membrane, particularly of a flexible roof covering material, and that the fastening means protrude externally from the dish-shaped body in watertight manner.

5. Mounting device according to one or more of the preceding claims, **characterized in that** the adapter device comprises a bent body with a flank for a screw connection to the beam and with a wing which extends relative thereto and which is connectable to the mounting base by means of the force transmission to the side of the beam.

6. Mounting device according to claim 5, **characterized in that** the bent body comprises a strip-like metal body with a substantially L-shaped or Z-shaped body section.

7. Mounting device according to claim 5 or 6, **characterized in that** the beam comprises a solid, form-closed beam body, particularly of wood or concrete.

8. Mounting device according to one or more of the claims 1-4, **characterized in that** the anchoring comprises at least one clamping member which is intended and configured to engage clampingly on a flange of the beam.

9. Mounting device according to claim 8, **characterized in that** the beam body comprises an H-beam, particularly a steel H-beam.

10. Mounting device according to one or more of the preceding claims, **characterized in that** the anchoring comprises a support body which engages on the beam on a side remote from the roof surface and extends laterally outside the beam, wherein the force transmission to the fastening means extends from the support body.

11. Mounting device according to one or more of the preceding claims, **characterized in that** the fastening means comprise one or more fastening members from a group comprising screw bolts, threaded ends and nuts.
